# EUROPEAN PATENT APPLICATION

(11) **EP 4 668 972 A1**
(43) Date of publication of application: **24.12.2025**
(21) Application number: 23922050.2
(22) Date of filing: 17.02.2023
(51) Int. Cl.: H04W 72/23

(54) **PHYSICAL DOWNLINK CONTROL CHANNEL (PDCCH) PROCESSING METHOD AND APPARATUS**

(71) Applicant: Beijing Xiaomi Mobile Software Co., Ltd., Beijing 100085 (CN)
(72) Inventor: MU, Qin, Beijing 100085 (CN); QIAO, Xuemei, Beijing 100085 (CN); LI, Yuanyuan, Beijing 100085 (CN)
(74) Representative: Stöckeler, Ferdinand
(86) International application number: PCT/CN2023/076990
(87) International publication number: WO 2024/168919

(57) **Abstract**

The embodiments of the present application disclose a physical downlink control channel (PDCCH) processing method and apparatus. The method comprises: determining that a first condition is met; on the basis of the number of CCEs included in a CORESET corresponding to a PDCCH, determining the maximum aggregation level supported by the PDCCH; and sending configuration information to a terminal device, wherein the configuration information is used for configuring an aggregation level used during the transmission of the PDCCH, the aggregation level used during the transmission of the PDCCH is used for the terminal device to process the PDCCH, and the aggregation level used during the transmission of the PDCCH does not exceed the maximum aggregation level supported by the PDCCH. Therefore, a PDCCH can be transmitted and processed more flexibly when a system bandwidth is insufficient, thereby effectively improving the resource utilization rate, improving the channel transmission performance, and ensuring the reliability of communication transmission.

## Description

### TECHNICAL FIELD

The present disclosure relates to the field of communication technologies, and in particular to a method and apparatus for processing a physical downlink control channel (PDCCH).

### BACKGROUND

In 3rd Generation Partnership Project (3GPP) R18, it is studied support for new radio (NR) technology in some dedicated spectrum of a Long Term Evolution (LTE) system/Global System for Mobile Communications-Railway (GSM-R). These spectrums mainly provide services for dedicated communications, such as power systems/railway systems in some countries and regions, public protection, disaster relief, etc. Typically, these spectrums support system bandwidths of 2.8MHz to 3.6MHz.

### SUMMARY

A first aspect of the embodiments of the present disclosure provides a method for processing a physical downlink control channel (PDCCH). The method is performed by a network device, and includes:
determining that a first condition is met;
determining a maximum aggregation level supported by the PDCCH based on a numerical count of control channel elements (CCEs) included in a control resource set (CORESET) corresponding to the PDCCH; and
sending configuration information to a terminal, in which the configuration information is used to configure an aggregation level used in a transmission of the PDCCH, the aggregation level used in the transmission of the PDCCH is used by the terminal to process the PDCCH, and the aggregation level used in the transmission of the PDCCH does not exceed the maximum aggregation level supported by the PDCCH.

A second aspect of the embodiments of the present disclosure provides a method for processing a PDCCH. The method is performed by a terminal and includes:
determining that a first condition is met;
determining a maximum aggregation level supported by the PDCCH based on a numerical count of CCEs included in a CORESET corresponding to the PDCCH; and
receiving configuration information sent by a network device, in which the configuration information is used to configure an aggregation level of the PDCCH, the aggregation level of the PDCCH is used by the terminal to process the PDCCH, and the configured aggregation level of the PDCCH does not exceed a maximum aggregation level supported by the PDCCH

A third aspect of the embodiments of the present disclosure provides an apparatus for processing a PDCCH. The apparatus includes:
a processing unit, configured to determine that a first condition is met;
the processing unit being further configured to determine a maximum aggregation level supported by the PDCCH based on a numerical count of CCEs included in a CORESET corresponding to the PDCCH; and
a transceiving unit, configured to send configuration information to a terminal, in which the configuration information is used to configure an aggregation level used in a transmission of the PDCCH, the aggregation level used in the transmission of the PDCCH is used by the terminal to process the PDCCH, and the aggregation level used in the transmission of the PDCCH does not exceed the maximum aggregation level supported by the PDCCH.

A fourth aspect of the embodiments of the present disclosure provides an apparatus for processing a PDCCH. The apparatus includes:
a processing unit, configured to determine that a first condition is met;
the processing unit being further configured to determine a maximum aggregation level supported by the PDCCH based on a numerical count of CCEs included in a CORESET corresponding to the PDCCH; and
a transceiving unit, configured to receive configuration information sent by a network device, in which the configuration information is used to configure an aggregation level of the PDCCH, the aggregation level of the PDCCH is used by the apparatus to process the PDCCH, and the configured aggregation level of the PDCCH does not exceed the maximum aggregation level supported by the PDCCH.

A fifth aspect of the embodiments of the present disclosure proposes a communication device. The device includes a processor and a memory, in which the memory stores a computer program, the processor executes the computer program stored in the memory, and the device is caused to perform the method for processing a PDCCH described in the first aspect of the embodiments.

A sixth aspect of the embodiments of the present disclosure proposes a communication device. The device includes a processor and a memory, in which the memory stores a computer program, the processor executes the computer program stored in the memory, and the device is caused to perform the method for processing a PDCCH described in the second aspect of the embodiments.

A seventh aspect of the embodiments of the present disclosure proposes a communication device. The device includes a processor and an interface circuit, the interface circuit is configured to receive code instructions and transmit them to the processor, and the processor is configured to run the code instructions to enable the device to perform the method for processing a PDCCH described in the first aspect of the embodiments above.

An eighth aspect of the embodiments of the present disclosure proposes a communication device. The device includes a processor and an interface circuit, the interface circuit is configured to receive code instructions and transmit them to the processor, and the processor is configured to run the code instructions to enable the device to perform the method for processing a PDCCH described in the second aspect of the embodiments above.

A ninth aspect of the embodiments of the present disclosure proposes a computer-readable storage medium for storing instructions. When the instructions are executed, the method for processing a PDCCH described in the first aspect of the embodiments is implemented.

A tenth aspect of the embodiments of the present disclosure proposes a computer-readable storage medium for storing instructions. When the instructions are executed, the method for processing a PDCCH described in the second aspect of the embodiments is implemented.

An eleventh aspect of the embodiments of the present disclosure proposes a computer program. When the computer program is executed on a computer, the computer is enabled to execute the method for processing a PDCCH described in the first aspect of the embodiments.

A twelfth aspect of the embodiments of the present disclosure proposes a computer program. When the computer program is executed on a computer, the computer is enabled to execute the method for processing a PDCCH described in the second aspect of the embodiments.

According to the method and apparatus for processing a PDCCH provided by the embodiments of the present disclosure, it is determined that the first condition is met, the maximum aggregation level supported by the PDCCH is determined based on the numerical count of the CCEs included in the CORESET corresponding to the PDCCH, and the configuration information is sent to the terminal. The configuration information is used to configure the aggregation level used in the transmission of the PDCCH. The aggregation level used in the transmission of the PDCCH is used by the terminal to process the PDCCH. The aggregation level used in the transmission of the PDCCH does not exceed the maximum aggregation level supported by the PDCCH. In this way, when the system bandwidth is insufficient, the PDCCH can be transmitted and processed more flexibly, thereby effectively improving resource utilization, improving channel transmission performance, and ensuring the reliability of communication transmission.

Additional aspects and advantages of the present disclosure will be given in part in the description below, and in part will become apparent from the description below, or will be learned through practice of the present disclosure.

### BRIEF DESCRIPTION OF THE DRAWINGS

In order to more clearly illustrate the technical solutions in the embodiments of the present disclosure or the background technology, the drawings required for use in the embodiments of the present disclosure or the background technology will be described below.
FIG. 1a is a schematic diagram of an architecture of a communication system provided by an embodiment of the present disclosure.
FIG. 1b is a schematic diagram of a PDCCH resource mapping provided by an embodiment of the present disclosure.
FIG. 2 is a schematic flow chart of a method for processing a PDCCH provided by an embodiment of the present disclosure.
FIG. 3 is a schematic diagram of a flow chart of a method for processing a PDCCH provided by an embodiment of the present disclosure.
FIG. 4 is a schematic flow chart of a method for processing a PDCCH provided by an embodiment of the present disclosure.
FIG. 5 is a schematic flow chart of a method for processing a PDCCH provided by an embodiment of the present disclosure.
FIG. 6 is a schematic flow chart of a method for processing a PDCCH provided by an embodiment of the present disclosure.
FIG. 7 is a schematic flow chart of a method for processing a PDCCH provided by an embodiment of the present disclosure.
FIG. 8 is a schematic structural diagram of an apparatus for processing a PDCCH provided by an embodiment of the present disclosure.
FIG. 9 is a schematic structural diagram of an apparatus for processing a PDCCH provided by an embodiment of the present disclosure.
FIG. 10 is a schematic structural diagram of another apparatus for processing a PDCCH provided by an embodiment of the present disclosure.
FIG. 11 is a schematic structural diagram of a chip provided by an embodiment of the present disclosure.

### DETAILED DESCRIPTION

Reference will now be made in detail to example embodiments, examples of which are illustrated in the accompanying drawings. When the following description refers to the drawings, unless otherwise indicated, the same numerals in different drawings represent the same or similar elements. Implementations described in the following example embodiments do not represent all implementations consistent with the embodiments of the present disclosure. Rather, they are merely examples of apparatus and methods consistent with some aspects of the embodiments of the application as recited in the appended claims.

The terms used in the embodiments of the present disclosure are only for the purpose of describing specific embodiments and are not intended to limit the embodiments of the present disclosure. As used in the embodiments of the present disclosure and the appended claims, the singular forms "a", "an", and "the" are intended to include the plural forms as well, unless the context clearly indicates otherwise. It will also be understood that the term "and/or" as used herein refers to and encompasses any and all possible combinations of one or more of the associated listed items.

It should be understood that although the terms first, second, third, etc. may be used to describe various information in the embodiments of the present disclosure, such information should not be limited to these terms. These terms are used only to distinguish information of the same type from one another. For example, without departing from the scope of the embodiments of the present disclosure, first information may also be referred to as second information, and similarly, second information may also be referred to as first information. Depending on the context, the words "if" as used herein may be interpreted as "when" or "in a case that" or "in response to determining that".

Embodiments of the present disclosure are described in detail below, examples of which are illustrated in the accompanying drawings, where the same or similar reference numerals throughout refer to the same or similar elements. The embodiments described below with reference to the accompanying drawings are exemplary and are intended to be used to explain the present disclosure, but should not be understood as limitation of the present disclosure.

In order to better understand a method for processing a PDCCH disclosed in an embodiment of the present disclosure, a communication system to which the embodiments of the present disclosure are applicable is first described below.

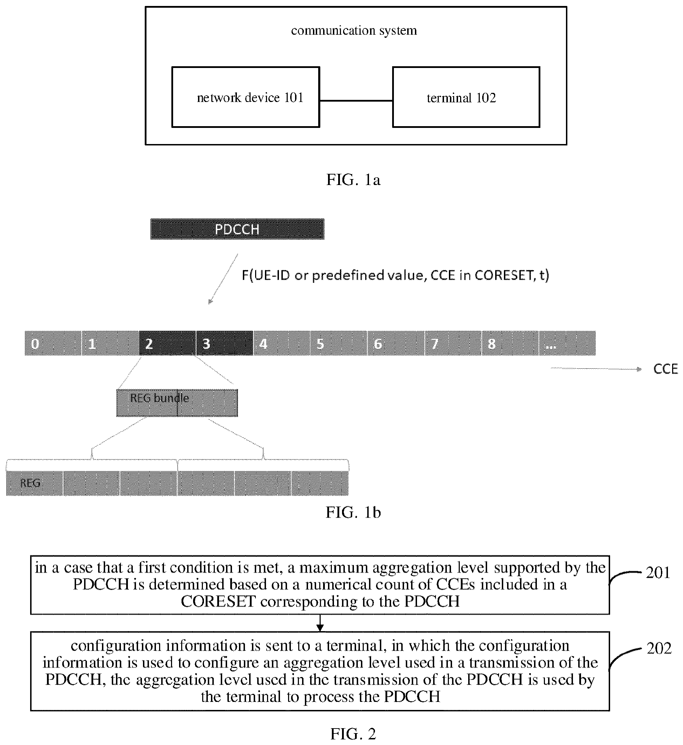

Please refer to FIG. 1a, which is a schematic diagram of an architecture of a communication system provided by an embodiment of the present disclosure. The communication system may include but is not limited to a network device and a terminal. The number and form of the devices shown in FIG. 1a are for example only and do not constitute a limitation on the embodiments of the present disclosure. In actual applications, two or more network devices and two or more terminals may be included. The communication system shown in FIG. 1a includes one network device 101 and one terminal 102 as an example.

It should be noted that the technical solutions of the embodiments of the present disclosure are applicable to various communication systems. For example: a Long Term Evolution (LTE) system, a Global System for Mobile Communications-Railway (GSM-R), a fifth-generation mobile communication system, a 5G new air interface system, or other future new mobile communication systems.

The network device 101 in the embodiments of the present disclosure is an entity on a network for transmitting or receiving signals. For example, the network device 101 may be an evolved NodeB (eNB), a transmission point (TRP), a next generation NodeB (gNB) in an NR system, a base station in other future mobile communication systems, or an access node in a wireless fidelity (Wi-Fi) system. The embodiments of the present disclosure do not limit the specific technology and specific device form adopted by the network device. The network device provided by the embodiments of the present disclosure may be composed of a centralized unit (CU) and a distributed unit (DU), where the CU may also be referred to as a Control Unit. The CU-DU structure may be used to split a protocol layer of the network device, such as a base station, and functions of a part of protocol layer may be centrally controlled by the CU, while the functions of the remaining part or all of the protocol layer may be distributed in the DU, and the DU may be centrally controlled by the CU.

The terminal 102 in the embodiments of the present disclosure is an entity on a user side for receiving or transmitting signals, such as a mobile phone. The terminal may also be referred to as a terminal device, a user equipment (UE), a mobile station (MS), a mobile terminal equipment (MT), etc. The terminal may be a car with communication functions, a smart car, a mobile phone, an Internet of Things (IoT) terminal, a wearable device, a tablet, a computer with wireless transceiver functions, a virtual reality (VR) terminal, an augmented reality (AR) terminal, a wireless terminal in Industrial Control, a wireless terminal in Self-Driving, a wireless terminal in Remote Medical Surgery, a wireless terminal in Smart Grid, a wireless terminal in Transportation Safety, a wireless terminal in Smart City, a wireless terminal in Smart Home, etc. The embodiments of the present disclosure do not limit the specific technology and specific device form adopted by the terminal.

In R18, it is studied support for NR technology in some dedicated spectrum of the LTE system/GSM-R system (such as n8, n26, n28 and n100 bands). These spectrums mainly provide services for dedicated communications, such as power systems/railway systems in some countries and regions, public protection, disaster relief, etc. These spectrums only support a subcarrier spacing of 15 kHz. Typically, the system bandwidth supported in the n8, n26, and n28 bands is 3MHz, and the system bandwidth supported in the n100 band is 2.8MHz to 3.6MHz.

In related art, a basic component unit of the physical downlink control channel (PDCCH) in NR is a Resource Element Group (REG). One REG corresponds to a size of a physical resource block (PRB) in a frequency domain (12 resource elements (REs)), and corresponds to a size of an Orthogonal Frequency Division Multiplexing (OFDM) symbol in a time domain. The multiple REGs form a REG group, and one or more REG groups form a control channel element (CCE). One CCE contains 6 REGs. In the current NR system, the PDCCH may be composed of 1, 2, 4, 8, or 16 CCEs. Here, the numerical count of the CCEs included in the PDCCH is referred to as an aggregation level (AL). When information bits of the PDCCH are fixed, its aggregation level is mainly determined by a channel condition. When the channel condition of the user is good, a smaller aggregation level may be used. When the channel condition is poor, a larger aggregation level is selected.

In the NR system, an area where the PDCCH may be transmitted is referred to as a Control Resource Set (CORESET). The CORESET includes multiple PRBs in the frequency domain. The NR protocol requires that the PRBs occupied by the CORESET must be an integer multiple of 6. In the time domain, it may occupy 1, 2 or 3 OFDM symbols. The CORESET may be shared by multiple PDCCHs, and multiple PDCCHs to be transmitted will be mapped to the CORESET according to the rule.

Specifically, the PDCCH is mapped to corresponding CCEs according to a predefined rule, in which each CCE includes multiple REG bundles, and there are 6 REGs in total that are included in the multiple REG bundles. Then a CCE is mapped to an REG bundle resource in the CORESET.

In summary, in some dedicated frequency bands, the supported system bandwidths are relatively low (e.g., only 2.8 MHz to 3.6 MHz), resulting in some configurations being unable to meet the maximum aggregation level supported by the PDCCH, thus limiting the coverage of the PDCCH. Furthermore, in the related art, the available aggregation level of PDCCH may be one of {1, 2, 4, 8, 16}. If the numerical count of available CCEs in the entire CORESET is 13, the maximum aggregation level that can be used at this time can only be 8, that is, only 8 CCEs can be used for the resource mapping, and the transmission resources of the CORESET cannot be fully utilized, which further limits the coverage of PDCCH. Therefore, a more flexible method for processing the PDCCH is needed to improve resource utilization.

It can be understood that the communication system described in the embodiments of the present disclosure is for the purpose of more clearly illustrating the technical solution of the embodiments of the present disclosure, and does not constitute a limitation on the technical solutions provided by the embodiments of the present disclosure. Ordinary technicians in the art may know that with the evolution of the system architecture and the emergence of new service scenarios, the technical solutions provided by the embodiments of the present disclosure are also applicable to similar technical problems.

The method for processing a PDCCH and apparatus provided by the present disclosure are described in detail below with reference to the accompanying drawings.

Please refer to FIG. 2, which is a flowchart of a method for processing a PDCCH provided by an embodiment of the present disclosure. It should be noted that the method for processing a PDCCH of this embodiment of the present disclosure is performed by a network device. The method may be executed independently or in combination with any other embodiment of the present disclosure. As shown in FIG. 2, the method may include the following steps.

At step 201, in a case that a first condition is met, a maximum aggregation level supported by the PDCCH is determined based on a numerical count of CCEs included in a CORESET corresponding to the PDCCH.

In an embodiment of the present disclosure, the first condition may be that the terminal operates in a first frequency band; or the first condition may be that the numerical count of the CCEs included in the CORESET corresponding to the PDCCH is less than a first threshold.

The first frequency band and the first threshold may be pre-defined by a protocol, for example, the first frequency band can be a dedicated frequency band pre-defined by the protocol (for example, the first frequency band may be any one or more of the n8, n26, n28 and n100 frequency bands). The first threshold may also be predefined by the protocol, such as 16 (or a maximum aggregation level that is supportable for the PDCCH under a general bandwidth, etc.). It is understandable that other values may be agreed upon as the first threshold and other frequency bands may be agreed upon as the first frequency band according to the communication system, which is not limited in the present disclosure.

In an embodiment of the present disclosure, the network device is capable of determining whether the first condition is met.

In these embodiments of the present disclosure, when it is determined the first condition is met, the network device can determine the maximum aggregation level that the PDCCH can support based on the numerical count of the CCEs included in the CORESET corresponding to the PDCCH.

In some implementations, the maximum aggregation level supported by the PDCCH is not in a first set predefined by the protocol. The first set includes at least one candidate aggregation level, that is, each element in the first set is an aggregation level that can be supported by the PDCCH predefined by the protocol. As an example, the first set may be {1, 2, 4, 8, 16}.

Optionally, the maximum aggregation level supported by the PDCCH may be determined according to the numerical count of the CCEs included in the CORESET corresponding to the PDCCH, and the maximum aggregation level supported by the PDCCH is equal to the numerical count of the CCEs included in the CORESET corresponding to the PDCCH.

As an example, the numerical count of the CCEs included in the CORESET corresponding to the PDCCH is 13, and it is determined that the maximum aggregation level supported by the PDCCH is 13.

In some embodiments, the maximum aggregation level supported by the PDCCH is included in the first set predefined by the protocol. The first set includes at least one candidate aggregation level, that is, each element in the first set is an aggregation level that can be supported by the PDCCH predefined by the protocol. As an example, the first set may be {1, 2, 4, 8, 16}.

Optionally, the maximum aggregation level supported by the PDCCH may be greater than the numerical count of the CCEs included in the CORESET corresponding to the PDCCH.

Optionally, the maximum aggregation level supported by the PDCCH may be determined from the first set.

In an implementation, at least one candidate aggregation level in the first set, which is greater than the numerical count of the CCEs included in the CORESET corresponding to the PDCCH, may be determined. An aggregation level with the smallest value among the at least one candidate aggregation level is selected as the maximum aggregation level supported by the PDCCH.

As an example, the first set is {1, 2, 4, 8, 16}, the numerical count of the CCEs contained in the CORESET corresponding to the PDCCH is 13, and at least one candidate aggregation level {16} greater than 13 in the first set is determined, and the smallest value 16 is selected as the maximum aggregation level supported by the PDCCH.

As another example, the first set is {1, 2, 4, 8, 16}, the numerical count of the CCEs contained in the CORESET corresponding to the PDCCH is 6, and at least one candidate aggregation level {8, 16} greater than 6 in the first set is determined, and the smallest value 8 is selected as the maximum aggregation level supported by the PDCCH.

In some embodiments, the method further includes the following step.

At step 202, configuration information is sent to a terminal, in which the configuration information is used to configure an aggregation level used in a transmission of the PDCCH, the aggregation level used in the transmission of the PDCCH is used by the terminal to process the PDCCH.

It can be understood that the aggregation level used in the transmission of the PDCCH does not exceed the maximum aggregation level supported by the PDCCH.

In these embodiments of the present disclosure, the network device can send the configuration information to the terminal, where the configuration information is used to configure the aggregation level used in the transmission of the PDCCH, and the aggregation level used in the transmission of the PDCCH is used by the terminal to process the received PDCCH. The aggregation level used in the transmission of the PDCCH cannot exceed the maximum aggregation level supported by the PDCCH.

The network device may determine the aggregation level used in the transmission of the PDCCH according to an actual channel condition, and use the aggregation level used in the transmission of the PDCCH to complete resource mapping and perform the transmission of the PDCCH. The network device may configure the aggregation level used in the transmission of the PDCCH to the terminal, so that the terminal processes the PDCCH based on the aggregation level.

In some implementations, if the aggregation level used in the transmission of the PDCCH is greater than the numerical count of the CCEs included in the CORESET corresponding to the PDCCH, the network device may perform rate matching based on the aggregation level used in the transmission of the PDCCH.

Optionally, performing the resource mapping on the PDCCH may specifically include: determining a second CORESET according to the maximum aggregation level supported by the PDCCH, where a numerical count of CCEs included in the second CORESET is equal to the maximum aggregation level supported by the PDCCH, and the multiple CCEs in the second CORESET include the CCEs in the CORESET corresponding to the PDCCH. First, the resource mapping of the PDCCH is performed in the second CORESET, that is, the PDCCH is mapped to the multiple CCEs included in the second CORESET. After mapping to the multiple CCEs included in the second CORESET, information in the CCEs included in the CORESET corresponding to the PDCCH is determined as information to be sent to the terminal. That is, in an actual transmission, the network device will discard information mapped to CCEs that are included in the second CORESET, but do not belong to the CCEs in the CORESET corresponding to the PDCCH.

It should be noted that if the network device performs the rate matching based on the aggregation level used in the transmission of the PDCCH, then for the terminal, it is required to perform bit-stuffing or symbol-stuff on the received PDCCH to make a length of the stuffed PDCCH equal to a length after the network device performs resource mapping based on the second CORESET.

In some implementations, if the aggregation level used in the transmission of the PDCCH is greater than the numerical count of the CCEs included in the CORESET corresponding to the PDCCH, the network device may perform rate matching based on the numerical count of the CCEs included in the CORESET corresponding to the PDCCH. As an example, the aggregation level used in the transmission of the PDCCH is 8, but there are 6 CCEs being occupied in the CORESET corresponding to the PDCCH, and the remaining 2 CCEs are outside the CORESET. In this case, the rate matching is performed according to the 6 CCEs.

Optionally, performing the resource mapping on the PDCCH may specifically include: mapping the PDCCH to the CCEs included in the CORESET corresponding to the PDCCH.

Correspondingly, for a terminal, after receiving the PDCCH, it may directly perform processing operations, such as decoding.

In summary, in a case that the first condition is met, the maximum aggregation level supported by the PDCCH is determined based on the numerical count of the CCEs included in the CORESET corresponding to the PDCCH, and the configuration information is sent to the terminal. The configuration information is used to configure the aggregation level used in the transmission of the PDCCH. The aggregation level used in the transmission of the PDCCH is used by the terminal to process the PDCCH. The aggregation level used in the transmission of the PDCCH does not exceed the maximum aggregation level supported by the PDCCH. In this way, when the system bandwidth is insufficient, the PDCCH can be transmitted and processed more flexibly, thereby effectively improving resource utilization, improving channel transmission performance, and ensuring the reliability of communication transmission.

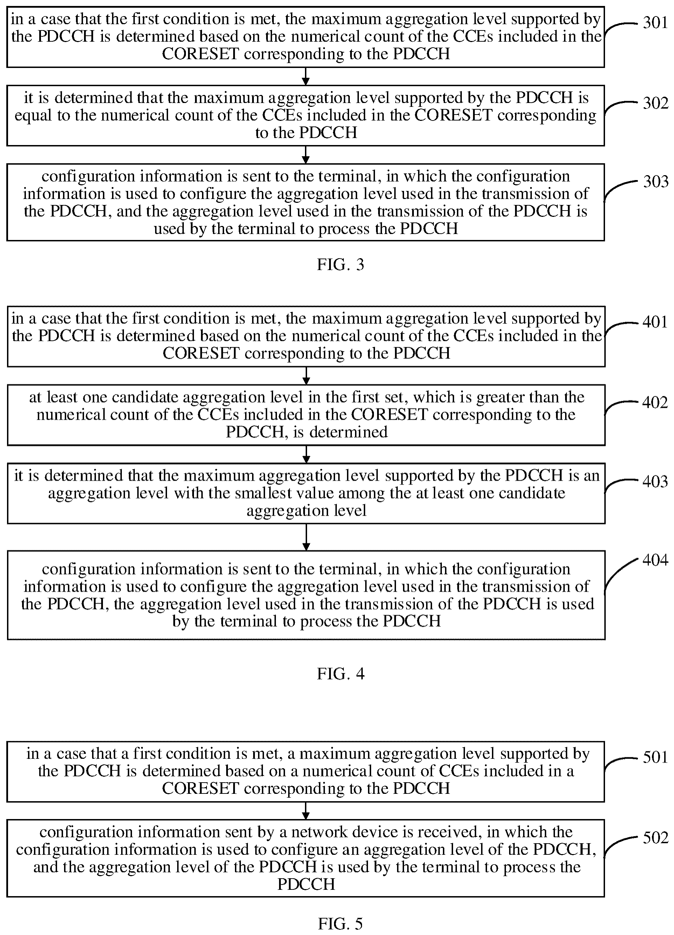

Please refer to FIG. 3, which is a flowchart of a method for processing a PDCCH provided by an embodiment of the present disclosure. It should be noted that the method for processing a PDCCH of this embodiment of the present disclosure is performed by a network device. This method can be executed independently or in combination with any other embodiment of the present disclosure. As shown in FIG. 3, the method may include the following steps.

At step 301, in a case that the first condition is met, the maximum aggregation level supported by the PDCCH is determined based on the numerical count of the CCEs included in the CORESET corresponding to the PDCCH.

In an embodiment of the present disclosure, the first condition may be that the terminal operates in the first frequency band, or the first condition may be that the numerical count of the CCEs included in the CORESET corresponding to the PDCCH is less than the first threshold.

The first frequency band and the first threshold may be pre-defined by a protocol, for example, the first frequency band can be a dedicated frequency band pre-defined by the protocol (for example, the first frequency band may be any one or more of the n8, n26, n28 and n100 frequency bands). The first threshold may also be predefined by the protocol, such as 16 (or a maximum aggregation level that is supportable for the PDCCH under a general bandwidth, etc.). It is understandable that other values may be agreed upon as the first threshold and other frequency bands may be agreed upon as the first frequency band according to the communication system, which is not limited in the present disclosure.

In an embodiment of the present disclosure, the network device is capable of determining whether the first condition is met.

In these embodiments of the present disclosure, when it is determined the first condition is met, the network device can determine the maximum aggregation level supported by the PDCC based on the numerical count of the CCEs included in the CORESET corresponding to the PDCCH.

At step 302, it is determined that the maximum aggregation level supported by the PDCCH is equal to the numerical count of the CCEs included in the CORESET corresponding to the PDCCH.

In these embodiments of the present disclosure, the maximum aggregation level that the PDCCH is allowed to support is not in the first set predefined by the protocol. The first set includes at least one candidate aggregation level, that is, each element in the first set is an aggregation level that can be supported by the PDCCH pre-defined by the protocol. As an example, the first set may be {1, 2, 4, 8, 16}.

In an embodiment of the present disclosure, the maximum aggregation level supported by the PDCCH may be determined according to the numerical count of the CCEs included in the CORESET corresponding to the PDCCH, and the maximum aggregation level supported by the PDCCH is equal to the numerical count of the CCEs included in the CORESET corresponding to the PDCCH.

As an example, the first set predefined by the protocol may be {1, 2, 4, 8, 16}, and the numerical count of the CCEs included in the CORESET corresponding to the PDCCH is 13, then it is determined that the maximum aggregation level supported by the PDCCH is 13.

As another example, the first set predefined by the protocol may be {1, 2, 4, 8, 16}, and the numerical count of the CCEs included in the CORESET corresponding to the PDCCH is 6, then it is determined that the maximum aggregation level supported by the PDCCH is 6.

In some embodiments, the method further includes the following step.

At step 303, configuration information is sent to the terminal, in which the configuration information is used to configure the aggregation level used in the transmission of the PDCCH, and the aggregation level used in the transmission of the PDCCH is used by the terminal to process the PDCCH.

It can be understood that the aggregation level used in the transmission of the PDCCH does not exceed the maximum aggregation level supported by the PDCCH.

In these embodiments of the present disclosure, the network device can send the configuration information to the terminal, where the configuration information is used to configure the aggregation level used in the transmission of the PDCCH, and the aggregation level used in the transmission of the PDCCH is used by the terminal to process the received PDCCH. The aggregation level used in the transmission of the PDCCH cannot exceed the maximum aggregation level supported by the PDCCH.

The network device may determine the aggregation level used in the transmission of the PDCCH according to an actual channel condition, and use the aggregation level used in the transmission of the PDCCH to complete resource mapping and perform the transmission of the PDCCH. The network device may configure the aggregation level used in the transmission of the PDCCH to the terminal.

In an embodiment of the present disclosure, the aggregation level used in the transmission of the PDCCH does not exceed the maximum aggregation level supported by the PDCCH, that is, it does not exceed the numerical count of the CCEs included in the CORESET corresponding to the PDCCH.

Optionally, performing resource mapping on the PDCCH may specifically include: mapping the PDCCH to the CCEs corresponding to the aggregation level of the PDCCH.

In summary, in a case that the first condition is met, the maximum aggregation level supported by the PDCCH is determined based on the numerical count of the CCEs included in the CORESET corresponding to the PDCCH, it is determined that the maximum aggregation level supported by the PDCCH is equal to the numerical count of the CCEs included in the CORESET corresponding to the PDCCH, and the configuration information is sent to the terminal. The configuration information is used to configure the aggregation level used in the transmission of the PDCCH. The aggregation level used in the transmission of the PDCCH is used by the terminal to process the PDCCH. In this way, when the system bandwidth is insufficient, the PDCCH can be transmitted and processed more flexibly, thereby effectively improving resource utilization, improving channel transmission performance, and ensuring the reliability of communication transmission.

Please refer to FIG. 4, which is a flowchart of a method for processing a PDCCH provided by an embodiment of the present disclosure. It should be noted that the method for processing a PDCCH of this embodiment of the present disclosure is performed by a network device. The method can be executed independently or in combination with any other embodiment of the present disclosure. As shown in FIG. 4, the method may include the following steps.

At step 401, in a case that the first condition is met, the maximum aggregation level supported by the PDCCH is determined based on the numerical count of the CCEs included in the CORESET corresponding to the PDCCH.

In an embodiment of the present disclosure, the first condition may be that the terminal operates in a first frequency band; or the first condition may be that the numerical count of the CCEs included in the CORESET corresponding to the PDCCH is less than a first threshold.

The first frequency band and the first threshold may be pre-defined by a protocol, for example, the first frequency band can be a dedicated frequency band pre-defined by the protocol (for example, the first frequency band may be any one or more of the n8, n26, n28 and n100 frequency bands). The first threshold may also be predefined by the protocol, such as 16 (or a maximum aggregation level that is supportable for the PDCCH under a general bandwidth, etc.). It is understandable that other values may be agreed upon as the first threshold and other frequency bands may be agreed upon as the first frequency band according to the communication system, which is not limited in the present disclosure.

In an embodiment of the present disclosure, the network device is capable of determining whether the first condition is met.

In these embodiments of the present disclosure, when it is determined that the first condition is met, the network device can determine the maximum aggregation level that the PDCCH can support based on the numerical count of the CCEs included in the CORESET corresponding to the PDCCH.

At step 402, at least one candidate aggregation level in the first set, which is greater than the numerical count of the CCEs included in the CORESET corresponding to the PDCCH, is determined.

In an embodiment of the present disclosure, the maximum aggregation level supported by the PDCCH needs to be included in the first set predefined by the protocol. The first set includes at least one candidate aggregation level, that is, each element in the first set is an aggregation level that can be supported by the PDCCH pre-defined by the protocol. As an example, the first set may be {1, 2, 4, 8, 16}.

In an embodiment of the present disclosure, the network device may determine the maximum aggregation level supported by the PDCCH from the first set.

Optionally, the maximum aggregation level supported by the PDCCH may be greater than the numerical count of the CCEs included in the CORESET corresponding to the PDCCH.

In an implementation, the network device may determine the at least one candidate aggregation level, that is greater than the numerical count of the CCEs included in the CORESET corresponding to the PDCCH, in the first set.

At step 403, it is determined that the maximum aggregation level supported by the PDCCH is an aggregation level with the smallest value among the at least one candidate aggregation level.

In an embodiment of the present disclosure, the network device may determine at least one candidate aggregation level in the first set that is greater than the numerical count of the CCEs included in the CORESET corresponding to the PDCCH, and select the aggregation level with the smallest value among the at least one candidate aggregation level as the maximum aggregation level supported by the PDCCH.

As an example, the first set is {1, 2, 4, 8, 16}, the numerical count of the CCEs contained in the CORESET corresponding to the PDCCH is 13, and at least one candidate aggregation level {16} greater than 13 in the first set is determined, and the smallest value 16 is selected as the maximum aggregation level supported by the PDCCH.

As another example, the first set is {1, 2, 4, 8, 16}, the numerical count of the CCEs contained in the CORESET corresponding to the PDCCH is 6, and at least one candidate aggregation level {8, 16} greater than 6 in the first set is determined, and the smallest value 8 is selected as the maximum aggregation level supported by the PDCCH.

In some embodiments, the method further includes the following step.

At step 404, configuration information is sent to the terminal, in which the configuration information is used to configure the aggregation level used in the transmission of the PDCCH, the aggregation level used in the transmission of the PDCCH is used by the terminal to process the PDCCH.

It can be understood that the aggregation level used in the transmission of the PDCCH does not exceed the maximum aggregation level supported by the PDCCH.

In these embodiments of the present disclosure, the network device can send the configuration information to the terminal, where the configuration information is used to configure the aggregation level used in the transmission of the PDCCH, and the aggregation level used in the transmission of the PDCCH is used by the terminal to process the received PDCCH. The aggregation level used in the transmission of the PDCCH cannot exceed the maximum aggregation level supported by the PDCCH.

The network device may determine the aggregation level used in the transmission of the PDCCH according to an actual channel condition, and use the aggregation level used in the transmission of the PDCCH to complete resource mapping and perform the transmission of the PDCCH. The network device may configure the aggregation level used in the transmission of the PDCCH to the terminal.

In some embodiments, if the aggregation level used in the transmission of the PDCCH is greater than the numerical count of the CCEs included in the CORESET corresponding to the PDCCH, the network device may perform rate matching based on the aggregation level used in the transmission of the PDCCH.

Optionally, performing the resource mapping on the PDCCH may specifically include: determining a second CORESET according to the maximum aggregation level supported by the PDCCH, where a numerical count of CCEs included in the second CORESET is equal to the maximum aggregation level supported by the PDCCH, and the multiple CCEs in the second CORESET include the CCEs in the CORESET corresponding to the PDCCH. First, the resource mapping of the PDCCH is performed in the second CORESET, that is, the PDCCH is mapped to the multiple CCEs included in the second CORESET. After mapping to the multiple CCEs included in the second CORESET, information in the CCEs included in the CORESET corresponding to the PDCCH is determined as information to be sent to the terminal. That is, in an actual transmission, the network device will discard information mapped to CCEs that are included in the second CORESET, but do not belong to the CCEs in the CORESET corresponding to the PDCCH.

It should be noted that if the network device performs the rate matching based on the aggregation level used in the transmission of the PDCCH, then for the terminal, it is required to perform bit-stuffing or symbol-stuff on the received PDCCH to make a length of the stuffed PDCCH equal to a length after the network device performs resource mapping based on the second CORESET.

As an example, the first set is {1, 2, 4, 8, 16}, the numerical count of the CCEs included in the CORESET corresponding to the PDCCH is 13, and the maximum aggregation level supported by the PDCCH is 16. If the aggregation level used in the transmission of the PDCCH is 16, which exceeds the numerical count of the CCEs included in the CORESET corresponding to the PDCCH, and the network device uses the aggregation level of 16 CCEs for the rate matching, then the network device may determine the second CORESET when performing the resource mapping on the PDCCH. The second CORESET includes 16 CCEs, and the 16 CCEs in the second CORESET include the 13 CCEs in the CORESET corresponding to the PDCCH. The network device maps the PDCCH to the 16 CCEs in the second CORESET. After mapping, the network device may determine the information in the 13 CCEs in the CORESET corresponding to the PDCCH as the information to be sent to the terminal, that is, the network device will discard the information mapped to the other 3 CCEs that are included in the 16 CCEs in the second CORESET but not belong to the 13 CCEs in the CORESET corresponding to the PDCCH.

Correspondingly, after receiving the PDCCH, the terminal needs to perform the bit-stuffing or symbol-stuff on the received PDCCH, to make the length of the stuffed PDCCH equal to the length of the information obtained after the network device performs the resource mapping based on the second CORESET, that is, to make the length of the stuffed PDCCH equal to the length after the network device maps the PDCCH to the 16 CCEs included in the second CORESET.

In some implementations, if the aggregation level used in the transmission of the PDCCH is greater than the numerical count of the CCEs included in the CORESET corresponding to the PDCCH (for example, the maximum aggregation level supported by the PDCCH is used for the transmission of the PDCCH), the network device may also perform the rate matching based on the numerical count of the CCEs included in the CORESET corresponding to the PDCCH. As an example, the aggregation level used in the transmission of the PDCCH is 8, but there are 6 CCEs being occupied in the CORESET corresponding to the PDCCH, and the remaining 2 CCEs are outside the CORESET. In this case, the rate matching is performed according to the 6 CCEs.

Optionally, performing the resource mapping on the PDCCH may specifically include: mapping the PDCCH to the CCEs included in the CORESET corresponding to the PDCCH.

Correspondingly, after receiving the PDCCH, the terminal may directly perform processing operations, such as decoding.

In summary, in a case that the first condition is met, the maximum aggregation level supported by the PDCCH is determined based on the numerical count of the CCEs included in the CORESET corresponding to the PDCCH, the at least one candidate aggregation level in the first set, that is greater than the numerical count of the CCEs included in the CORESET corresponding to the PDCCH, is determined, it is determined that the maximum aggregation level supported by the PDCCH is the aggregation level with the smallest value among the at least one candidate aggregation level, the configuration information is sent to the terminal, the configuration information is used to configure the aggregation level used in the transmission of the PDCCH, and the aggregation level used in the transmission of the PDCCH is used by the terminal to process the PDCCH. In this way, when the system bandwidth is insufficient, the PDCCH can be transmitted and processed more flexibly, thereby effectively improving resource utilization, improving channel transmission performance, and ensuring the reliability of communication transmission.

Please refer to FIG. 5, which is a flowchart of a method for processing a PDCCH provided by an embodiment of the present disclosure. It should be noted that the method for processing a PDCCH of this embodiment of the present disclosure is performed by the terminal. This method can be executed independently or in combination with any other embodiment of the present disclosure.

As shown in FIG. 5, the method may include the following steps.

At step 501, in a case that a first condition is met, a maximum aggregation level supported by the PDCCH is determined based on a numerical count of CCEs included in a CORESET corresponding to the PDCCH.

In an embodiment of the present disclosure, the first condition may be that the terminal operates in a first frequency band; or the first condition may be that the numerical count of the CCEs included in the CORESET corresponding to the PDCCH is less than a first threshold.

The first frequency band and the first threshold may be pre-defined by a protocol, for example, the first frequency band can be a dedicated frequency band pre-defined by the protocol (for example, the first frequency band may be any one or more of the n8, n26, n28 and n100 frequency bands). The first threshold may also be predefined by the protocol, such as 16 (or a maximum aggregation level that is supportable for the PDCCH under a general bandwidth, etc.). It is understandable that other values may be agreed upon as the first threshold and other frequency bands may be agreed upon as the first frequency band according to the communication system, which is not limited in the present disclosure.

In an embodiment of the present disclosure, the terminal is also capable of determining whether the first condition is met.

In an embodiment of the present disclosure, when it is determined that the first condition is met, the terminal can also determine the maximum aggregation level that the PDCCH can support based on the numerical count of the CCEs included in the CORESET corresponding to the PDCCH.

In some implementations, the maximum aggregation level supported by the PDCCH is not in a first set predefined by the protocol. The first set includes at least one candidate aggregation level, that is, each element in the first set is an aggregation level that can be supported by the PDCCH predefined by the protocol. As an example, the first set may be {1, 2, 4, 8, 16}.

Optionally, the maximum aggregation level supported by the PDCCH may be determined according to the numerical count of the CCEs included in the CORESET corresponding to the PDCCH, and the maximum aggregation level supported by the PDCCH is equal to the numerical count of the CCEs included in the CORESET corresponding to the PDCCH.

As an example, the numerical count of the CCEs included in the CORESET corresponding to the PDCCH is 13, and it is determined that the maximum aggregation level supported by the PDCCH is 13.

In some embodiments, the maximum aggregation level supported by the PDCCH is included in the first set predefined by the protocol. The first set includes at least one candidate aggregation level, that is, each element in the first set is an aggregation level that can be supported by the PDCCH predefined by the protocol. As an example, the first set may be {1, 2, 4, 8, 16}.

Optionally, the maximum aggregation level supported by the PDCCH may be greater than the numerical count of the CCEs included in the CORESET corresponding to the PDCCH.

Optionally, the maximum aggregation level supported by the PDCCH may be determined from the first set.

In an implementation, at least one candidate aggregation level in the first set, which is greater than the numerical count of the CCEs included in the CORESET corresponding to the PDCCH, may be determined. An aggregation level with the smallest value among the at least one candidate aggregation level is selected as the maximum aggregation level supported by the PDCCH.

As an example, the first set is {1, 2, 4, 8, 16}, the numerical count of the CCEs contained in the CORESET corresponding to the PDCCH is 13, and at least one candidate aggregation level {16} greater than 13 in the first set is determined, and the smallest value 16 is selected as the maximum aggregation level supported by the PDCCH.

As another example, the first set is {1, 2, 4, 8, 16}, the numerical count of the CCEs contained in the CORESET corresponding to the PDCCH is 6, and at least one candidate aggregation level {8, 16} greater than 6 in the first set is determined, and the smallest value 8 is selected as the maximum aggregation level supported by the PDCCH.

In some embodiments, the method further includes the following step.

At step 502, configuration information sent by a network device is received, in which the configuration information is used to configure an aggregation level of the PDCCH, and the aggregation level of the PDCCH is used by the terminal to process the PDCCH.

It can be understood that the aggregation level used in the transmission of the PDCCH does not exceed the maximum aggregation level supported by the PDCCH.

In these embodiments of the present disclosure, the terminal can receive the configuration information sent by the network device, where the configuration information is used to configure the aggregation level used in the transmission of the PDCCH. The aggregation level used in the transmission of the PDCCH is used by the terminal to process the received PDCCH. The aggregation level used in the transmission of the PDCCH cannot exceed the maximum aggregation level supported by the PDCCH.

The network device may determine the aggregation level used in the transmission of the PDCCH according to an actual channel condition, and use the aggregation level used in the transmission of the PDCCH to complete resource mapping and perform the transmission of the PDCCH. The network device may configure the aggregation level used in the transmission of the PDCCH to the terminal, so that the terminal processes the PDCCH based on the aggregation level.

In some implementations, if the aggregation level used in the transmission of the PDCCH is greater than the numerical count of the CCEs included in the CORESET corresponding to the PDCCH, and the network device performs rate matching based on the aggregation level used in the transmission of the PDCCH. The terminal needs to perform bit-stuffing or symbol-stuffing on the received PDCCH, to make a length of the stuffed PDCCH equal to a length of information obtained after the network device performs the resource mapping according to the maximum aggregation level supported by the PDCCH.

It should be noted that, in the case of the above rate matching, the network device may perform the resource mapping on the PDCCH, which specifically includes: determining a second CORESET according to the maximum aggregation level supported by the PDCCH, where a numerical count of CCEs included in the second CORESET is equal to the maximum aggregation level supported by the PDCCH, and the multiple CCEs in the second CORESET include the CCEs in the CORESET corresponding to the PDCCH. First, the resource mapping of the PDCCH is performed in the second CORESET, that is, the PDCCH is mapped to the multiple CCEs included in the second CORESET. After mapping to the multiple CCEs included in the second CORESET, information in the CCEs included in the CORESET corresponding to the PDCCH is determined as information to be sent to the terminal. That is, in an actual transmission, the network device will discard information mapped to CCEs that are included in the second CORESET, but do not belong to the CCEs in the CORESET corresponding to the PDCCH.

Therefore, for the terminal, it is required to perform the bit-stuffing or symbol-stuffing on the received PDCCH, to make the length of the stuffed PDCCH equal to the length of information obtained after the network device performs the resource mapping according to the second CORESET. The terminal may perform processing operations, such as decoding, on the information obtained after being stuffed.

In some embodiments, if the aggregation level used in the transmission of the PDCCH is greater than the numerical count of the CCEs contained in the CORESET corresponding to the PDCCH, and the network device performs rate matching based on the numerical count of the CCEs included in the CORESET corresponding to the PDCCH, the terminal may directly process the received information.

As an example, the aggregation level used in the transmission of the PDCCH is 8, but there are 6 CCEs being occupied in the CORESET corresponding to the PDCCH, and the remaining 2 CCEs are outside the CORESET. In this case, the rate matching is performed according to the 6 CCEs.

It should be noted that, in the case of the above rate matching, the network device performs the resource mapping on the PDCCH, which may specifically include: mapping the PDCCH to the CCEs included in the CORESET corresponding to the PDCCH.

In summary, in a case that the first condition is met, the maximum aggregation level supported by the PDCCH is determined based on the numerical count of the CCEs included in the CORESET corresponding to the PDCCH, and the configuration information sent by the network device is received. The configuration information is used to configure the aggregation level of the PDCCH. The aggregation level of the PDCCH is used by the terminal to process the PDCCH. In this way, when the system bandwidth is insufficient, the PDCCH can be transmitted and processed more flexibly, thereby effectively improving resource utilization, improving channel transmission performance, and ensuring the reliability of communication transmission.

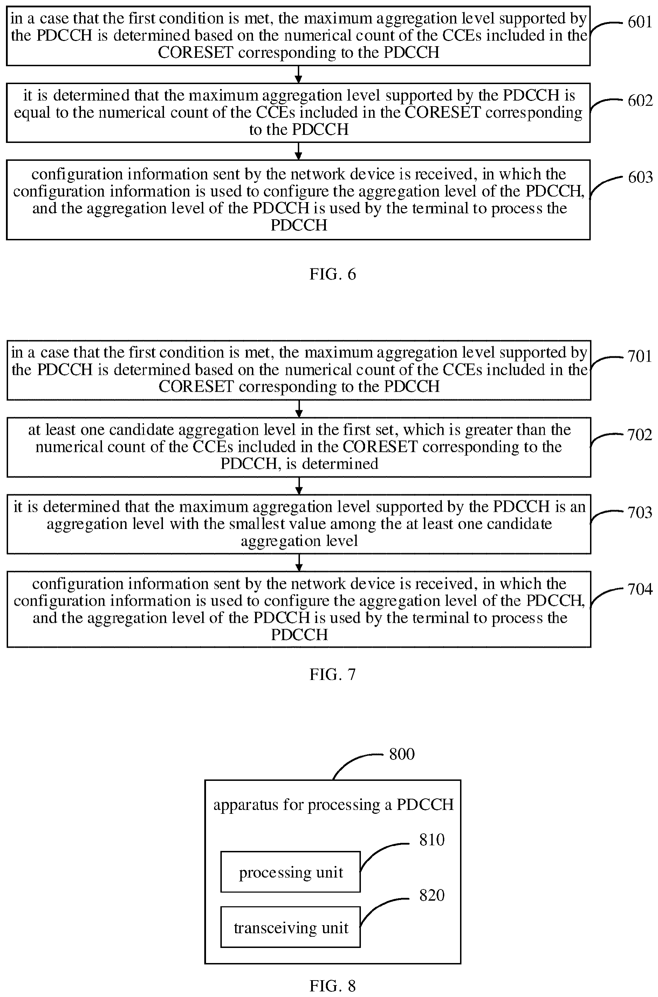

Please refer to FIG. 6, which is a flowchart of a method for processing a PDCCH provided by an embodiment of the present disclosure. It should be noted that the method for processing a PDCCH of this embodiment of the present disclosure is performed by the terminal. This method can be executed independently or in combination with any other embodiment of the present disclosure. As shown in FIG. 6, the method may include the following steps.

At step 601, in a case that the first condition is met, the maximum aggregation level supported by the PDCCH is determined based on the numerical count of the CCEs included in the CORESET corresponding to the PDCCH.

In an embodiment of the present disclosure, the first condition may be that the terminal operates in the first frequency band, or the first condition may be that the numerical count of the CCEs included in the CORESET corresponding to the PDCCH is less than the first threshold.

The first frequency band and the first threshold may be pre-defined by a protocol, for example, the first frequency band can be a dedicated frequency band pre-defined by the protocol (for example, the first frequency band may be any one or more of the n8, n26, n28 and n100 frequency bands). The first threshold may also be predefined by the protocol, such as 16 (or a maximum aggregation level that is supportable for the PDCCH under a general bandwidth, etc.). It is understandable that other values may be agreed upon as the first threshold and other frequency bands may be agreed upon as the first frequency band according to the communication system, which is not limited in the present disclosure.

In an embodiment of the present disclosure, the terminal is also capable of determining whether the first condition is met.

In these embodiments of the present disclosure, when it is determined the first condition is met, the terminal can determine the maximum aggregation level supported by the PDCC based on the numerical count of the CCEs included in the CORESET corresponding to the PDCCH.

At step 602, it is determined that the maximum aggregation level supported by the PDCCH is equal to the numerical count of the CCEs included in the CORESET corresponding to the PDCCH.

In these embodiments of the present disclosure, the maximum aggregation level that the PDCCH is allowed to support is not in the first set predefined by the protocol. The first set includes at least one candidate aggregation level, that is, each element in the first set is an aggregation level that can be supported by the PDCCH pre-defined by the protocol. As an example, the first set may be {1, 2, 4, 8, 16}.

Optionally, the maximum aggregation level supported by the PDCCH may be determined according to the numerical count of the CCEs included in the CORESET corresponding to the PDCCH, and the maximum aggregation level supported by the PDCCH is equal to the numerical count of the CCEs included in the CORESET corresponding to the PDCCH.

As an example, the first set predefined by the protocol may be {1, 2, 4, 8, 16}, and the numerical count of the CCEs included in the CORESET corresponding to the PDCCH is 13, then it is determined that the maximum aggregation level supported by the PDCCH is 13.

As another example, the first set predefined by the protocol may be {1, 2, 4, 8, 16}, and the numerical count of the CCEs included in the CORESET corresponding to the PDCCH is 6, then it is determined that the maximum aggregation level supported by the PDCCH is 6.

In some embodiments, the method further includes the following step.

At step 603, configuration information sent by the network device is received, in which the configuration information is used to configure the aggregation level of the PDCCH, and the aggregation level of the PDCCH is used by the terminal to process the PDCCH.

It can be understood that the aggregation level used in the transmission of the PDCCH does not exceed the maximum aggregation level supported by the PDCCH.

In these embodiments of the present disclosure, the terminal can receive the configuration information sent by the network device, where the configuration information is used to configure the aggregation level used in the transmission of the PDCCH, and the aggregation level used in the transmission of the PDCCH is used by the terminal to process the received PDCCH. The aggregation level used in the transmission of the PDCCH cannot exceed the maximum aggregation level supported by the PDCCH.

The network device may determine the aggregation level used in the transmission of the PDCCH according to an actual channel condition, and use the aggregation level used in the transmission of the PDCCH to complete resource mapping and perform the transmission of the PDCCH. The network device may configure the aggregation level used in the transmission of the PDCCH to the terminal, so that the terminal can process the PDCCH based on the aggregation level.

In an embodiment of the present disclosure, the aggregation level used in the transmission of the PDCCH does not exceed the maximum aggregation level supported by the PDCCH, that is, it does not exceed the numerical count of the CCEs included in the CORESET corresponding to the PDCCH. The terminal may perform processing operations, such as decoding, on the received PDCCH based on the aggregation level used in the transmission of the PDCCH.

It should be noted that, in an embodiment of the present disclosure, the network device may perform resource mapping on the PDCCH, which may specifically include: mapping the PDCCH to the CCEs corresponding to the aggregation level of the PDCCH.

In summary, in a case that the first condition is met, the maximum aggregation level supported by the PDCCH is determined based on the numerical count of the CCEs included in the CORESET corresponding to the PDCCH, it is determined that the maximum aggregation level supported by the PDCCH is equal to the numerical count of the CCEs included in the CORESET corresponding to the PDCCH, and the configuration information sent by the network device is received, the configuration information is used to configure the aggregation level of the PDCCH, and the aggregation level of the PDCCH is used by the terminal to process the PDCCH. In this way, when the system bandwidth is insufficient, the PDCCH can be transmitted and processed more flexibly, thereby effectively improving resource utilization, improving channel transmission performance, and ensuring the reliability of communication transmission.

Please refer to FIG. 7, which is a flowchart of a method for processing a PDCCH provided by an embodiment of the present disclosure. It should be noted that the method for processing a PDCCH of this embodiment of the present disclosure is performed by the terminal. This method can be executed independently or in combination with any other embodiment of the present disclosure. As shown in FIG. 7, the method may include the following steps.

At step 701, in a case that the first condition is met, the maximum aggregation level supported by the PDCCH is determined based on the numerical count of the CCEs included in the CORESET corresponding to the PDCCH.

In an embodiment of the present disclosure, the first condition may be that the terminal operates in a first frequency band; or the first condition may be that the numerical count of the CCEs included in the CORESET corresponding to the PDCCH is less than a first threshold.

The first frequency band and the first threshold may be pre-defined by a protocol, for example, the first frequency band can be a dedicated frequency band pre-defined by the protocol (for example, the first frequency band may be any one or more of the n8, n26, n28 and n100 frequency bands). The first threshold may also be predefined by the protocol, such as 16 (or a maximum aggregation level that is supportable for the PDCCH under a general bandwidth, etc.). It is understandable that other values may be agreed upon as the first threshold and other frequency bands may be agreed upon as the first frequency band according to the communication system, which is not limited in the present disclosure.

In an embodiment of the present disclosure, the terminal is also capable of determining whether the first condition is met.

In these embodiments of the present disclosure, when it is determined that the first condition is met, the terminal can determine the maximum aggregation level that the PDCCH can support based on the numerical count of the CCEs included in the CORESET corresponding to the PDCCH.

At step 702, at least one candidate aggregation level in the first set, which is greater than the numerical count of the CCEs included in the CORESET corresponding to the PDCCH, is determined.

In these embodiments of the present disclosure, the maximum aggregation level supported by the PDCCH needs to be included in the first set predefined by the protocol. The first set includes at least one candidate aggregation level, that is, each element in the first set is an aggregation level that can be supported by the PDCCH pre-defined by the protocol. As an example, the first set may be {1, 2, 4, 8, 16}.

In an embodiment of the present disclosure, the terminal may also determine the maximum aggregation level supported by the PDCCH from the first set.

Optionally, the maximum aggregation level supported by the PDCCH may be greater than the numerical count of the CCEs included in the CORESET corresponding to the PDCCH.

In an implementation, the terminal may determine the at least one candidate aggregation level, that is greater than the numerical count of the CCEs included in the CORESET corresponding to the PDCCH, in the first set.

At step 703, it is determined that the maximum aggregation level supported by the PDCCH is an aggregation level with the smallest value among the at least one candidate aggregation level.

In an embodiment of the present disclosure, the terminal may also determine at least one candidate aggregation level in the first set that is greater than the numerical count of the CCEs included in the CORESET corresponding to the PDCCH, and select the aggregation level with the smallest value among the at least one candidate aggregation level as the maximum aggregation level supported by the PDCCH.

As an example, the first set is {1, 2, 4, 8, 16}, the numerical count of the CCEs contained in the CORESET corresponding to the PDCCH is 13, and at least one candidate aggregation level {16} greater than 13 in the first set is determined, and the smallest value 16 is selected as the maximum aggregation level supported by the PDCCH.

As another example, the first set is {1, 2, 4, 8, 16}, the numerical count of the CCEs contained in the CORESET corresponding to the PDCCH is 6, and at least one candidate aggregation level {8, 16} greater than 6 in the first set is determined, and the smallest value 8 is selected as the maximum aggregation level supported by the PDCCH.

In some embodiments, the method further includes the following step.

At step 704, configuration information sent by the network device is received, in which the configuration information is used to configure the aggregation level of the PDCCH, and the aggregation level of the PDCCH is used by the terminal to process the PDCCH.

It can be understood that the aggregation level used in the transmission of the PDCCH does not exceed the maximum aggregation level supported by the PDCCH.

In these embodiments of the present disclosure, the terminal can receive the configuration information sent by the network device, where the configuration information is used to configure the aggregation level used in the transmission of the PDCCH, and the aggregation level used in the transmission of the PDCCH is used by the terminal to process the received PDCCH. The aggregation level used in the transmission of the PDCCH cannot exceed the maximum aggregation level supported by the PDCCH.

The network device may determine the aggregation level used in the transmission of the PDCCH according to an actual channel condition, and use the aggregation level used in the transmission of the PDCCH to complete resource mapping and perform the transmission of the PDCCH. The network device may configure the aggregation level used in the transmission of the PDCCH to the terminal, so that the terminal can process the PDCCH based on the aggregation level.

In some embodiments, if the aggregation level used in the transmission of the PDCCH is greater than the numerical count of the CCEs included in the CORESET corresponding to the PDCCH, and the network device performs the rate matching based on the aggregation level used in the transmission of the PDCCH, the terminal needs perform bit-stuffing or symbol-stuffing on the received PDCCH, to make a length of the stuffed PDCCH equal to a length of information obtained after the network device performs the resource mapping according to the maximum aggregation level supported by the PDCCH.

It should be noted that, in the case of the above rate matching, the network device may perform resource mapping on the PDCCH, which may specifically include: determining a second CORESET according to the maximum aggregation level supported by the PDCCH, where a numerical count of CCEs included in the second CORESET is equal to the maximum aggregation level supported by the PDCCH, and the multiple CCEs in the second CORESET include the CCEs in the CORESET corresponding to the PDCCH. First, the resource mapping of the PDCCH is performed in the second CORESET, that is, the PDCCH is mapped to the multiple CCEs included in the second CORESET. After mapping to the multiple CCEs included in the second CORESET, information in the CCEs included in the CORESET corresponding to the PDCCH is determined as information to be sent to the terminal. That is, in an actual transmission, the network device will discard information mapped to CCEs that are included in the second CORESET, but do not belong to the CCEs in the CORESET corresponding to the PDCCH.

Therefore, for the terminal, it is required to perform the bit-stuffing or symbol-stuffing on the received PDCCH, to make the length of the stuffed PDCCH equal to the length of information obtained after the network device performs the resource mapping according to the second CORESET. The terminal may perform processing operations, such as decoding, on the information obtained after being stuffed.

As an example, the first set is {1, 2, 4, 8, 16}, the numerical count of the CCEs included in the CORESET corresponding to the PDCCH is 13, and the maximum aggregation level supported by the PDCCH is 16. If the aggregation level used in the transmission of the PDCCH is 16, which exceeds the numerical count of the CCEs included in the CORESET corresponding to the PDCCH, and the network device uses the aggregation level of 16 CCEs for the rate matching, then the network device may determine the second CORESET when performing the resource mapping on the PDCCH. The second CORESET includes 16 CCEs, and the 16 CCEs in the second CORESET include the 13 CCEs in the CORESET corresponding to the PDCCH. The network device maps the PDCCH to the 16 CCEs in the second CORESET. After mapping, the network device may determine the information in the 13 CCEs in the CORESET corresponding to the PDCCH as the information to be sent to the terminal, that is, the network device will discard the information mapped to the other 3 CCEs that are included in the 16 CCEs in the second CORESET but not belong to the 13 CCEs in the CORESET corresponding to the PDCCH.

Correspondingly, after receiving the PDCCH, the terminal needs to perform the bit-stuffing or symbol-stuff on the received PDCCH, to make the length of the stuffed PDCCH equal to the length of the information obtained after the network device performs the resource mapping based on the second CORESET, that is, to make the length of the stuffed PDCCH equal to the length after the network device maps the PDCCH to the 16 CCEs included in the second CORESET.

In some implementations, if the aggregation level used in the transmission of the PDCCH is greater than the numerical count of the CCEs included in the CORESET corresponding to the PDCCH, and the network device performs the rate matching based on the numerical count of the CCEs included in the CORESET corresponding to the PDCCH, the terminal may directly perform decoding and other processing operations on the received PDCCH.

As an example, the aggregation level used in the transmission of the PDCCH is 8, but there are 6 CCEs being occupied in the CORESET corresponding to the PDCCH, and the remaining 2 CCEs are outside the CORESET. In this case, the rate matching is performed according to the 6 CCEs.

It should be noted that, in the case of the above rate matching, the network device performs the resource mapping on the PDCCH, which may specifically include: mapping the PDCCH to the CCEs included in the CORESET corresponding to the PDCCH.

In summary, in a case that the first condition is met, the maximum aggregation level supported by the PDCCH is determined based on the numerical count of the CCEs included in the CORESET corresponding to the PDCCH, the at least one candidate aggregation level in the first set, that is greater than the numerical count of the CCEs included in the CORESET corresponding to the PDCCH, is determined, the it is determined that the maximum aggregation level supported by the PDCCH is the aggregation level with the smallest value among the at least one candidate aggregation level, the configuration information sent by the network device is received, the configuration information is used to configure the aggregation level of the PDCCH, and the aggregation level of the PDCCH is used by the terminal to process the PDCCH. In this way, when the system bandwidth is insufficient, the PDCCH can be transmitted and processed more flexibly, thereby effectively improving resource utilization, improving channel transmission performance, and ensuring the reliability of communication transmission.

Corresponding to the methods for processing a PDCCH provided by the above-mentioned embodiments, the present disclosure also provides an apparatus for processing a PDCCH. Since the apparatuses for processing a PDCCH provided by the embodiments of the present disclosure corresponds to the methods provided by the above-mentioned embodiments, the implementations of the method for processing a PDCCH are also applicable to the apparatus for processing a PDCCH provided by the following embodiments, and will not be described in detail in the following embodiments.

Please refer to FIG. 8, which is a schematic structural diagram of an apparatus for processing a PDCCH provided by an embodiment of the present disclosure.

As shown in FIG. 8, the apparatus 800 for processing a PDCCH includes a processing unit 810 and a transceiving unit 820.

The processing unit 810 is configured to determine that a first condition is met.

The processing unit 810 is further configured to determine a maximum aggregation level supported by a PDCCH based on a number of CCEs included in a CORESET corresponding to the PDCCH;
The transceiving unit 820 is configured to send configuration information to a terminal. The configuration information is used to configure an aggregation level used in a transmission of the PDCCH. The aggregation level used in the transmission of the PDCCH is used by the terminal to process the PDCCH. The aggregation level used in the transmission of the PDCCH does not exceed the maximum aggregation level supported by the PDCCH.

Optionally, the maximum aggregation level supported by the PDCCH is not in a predefined first set, and the predefined first set includes at least one candidate aggregation level.

Optionally, the maximum aggregation level supported by the PDCCH is equal to the numerical count of the CCEs included in the CORESET.

Optionally, the maximum aggregation level supported by the PDCCH is in a predefined first set, and the predefined first set includes at least one candidate aggregation level.

Optionally, the maximum aggregation level supported by the PDCCH is greater than the numerical count of the CCEs included in the CORESET.

Optionally, the processing unit 810 is specifically configured to:
determine at least one candidate aggregation level, that is greater than the numerical count of the CCEs included in the CORESET, in the predefined first set; and
determine that the maximum aggregation level supported by the PDCCH is an aggregation level with a smallest value among the at least one candidate aggregation level.

Optionally, the processing unit 810 is further configured to:
perform rate matching of the PDCCH based on the aggregation level used in the transmission of the PDCCH, in response to the aggregation level used in the transmission of the PDCCH being greater than the numerical count of the CCEs included in the CORESET.

Optionally, the processing unit 810 is further configured to:
determine a second CORESET according to the maximum aggregation level supported by the PDCCH, in which a numerical count of CCEs included in the second CORESET is equal to the maximum aggregation level supported by the PDCCH, and the CCEs in the second CORESET include the CCEs in the CORESET corresponding to the PDCCH; and
map the PDCCH to the CCEs included in the second CORESET, and determine information in the CCEs in the CORESET corresponding to the PDCCH as information to be sent to the terminal.

Optionally, the processing unit 810 is further configured to:
perform rate matching of the PDCCH based on the numerical count of the CCEs included in the CORESET corresponding to the PDCCH, in response to the aggregation level used in the transmission of the PDCCH being greater than the numerical count of the CCEs included in the CORESET.

Optionally, the processing unit 810 is further configured to:
map the PDCCH to the CCEs included in the CORESET corresponding to the PDCCH.

Optionally, the first condition is that the terminal operates in a first frequency band; or
the first condition is that the numerical count of the CCEs included in the CORESET corresponding to the PDCCH is less than a first threshold.

The apparatus for processing a PDCCH of these embodiments can determine, in a case that the first condition is met, the maximum aggregation level supported by the PDCCH based on the numerical count of the CCEs included in the CORESET corresponding to the PDCCH, and send the configuration information to the terminal. The configuration information is used to configure the aggregation level used in the transmission of the PDCCH. The aggregation level used in the transmission of the PDCCH is used by the terminal to process the PDCCH. The aggregation level used in the transmission of the PDCCH does not exceed the maximum aggregation level supported by the PDCCH. In this way, when the system bandwidth is insufficient, the PDCCH can be transmitted and processed more flexibly, thereby effectively improving resource utilization, improving channel transmission performance, and ensuring the reliability of communication transmission.

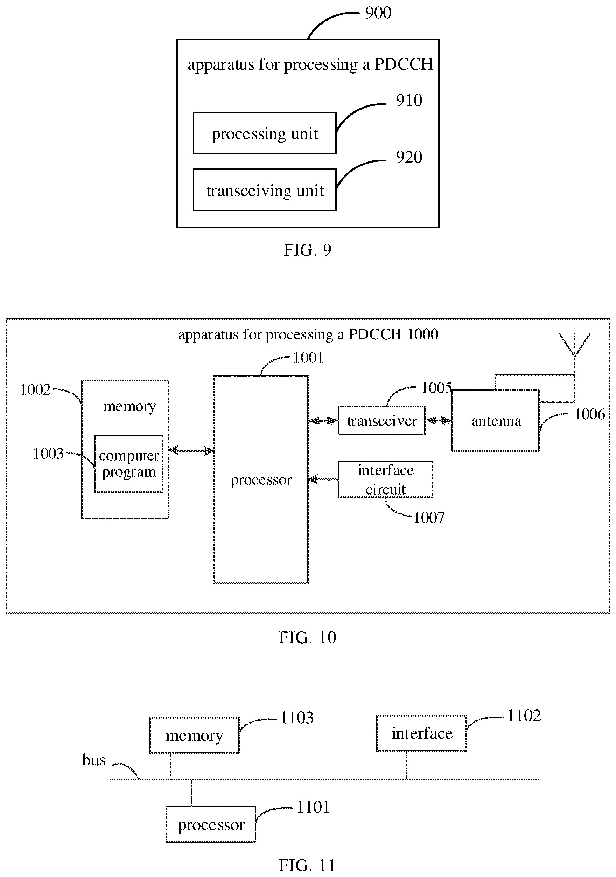

Please refer to FIG. 9, which is a structural diagram of an apparatus for processing a PDCCH provided by an embodiment of the present disclosure. As shown in FIG. 9, the apparatus 900 for processing a PDCCH includes: a processing unit 910 and a transceiving unit 920.

The processing unit 910 is configured to determine that a first condition is met.

The processing unit 910 is further configured to determine a maximum aggregation level supported by a PDCCH based on a numerical count of CCEs included in a CORESET corresponding to the PDCCH.

The transceiving unit 920 is used to receive configuration information sent by a network device, in which the configuration information is used to configure an aggregation level of the PDCCH, the aggregation level of the PDCCH is used by the terminal to process the PDCCH, and the configured aggregation level of the PDCCH does not exceed a maximum aggregation level supported by the PDCCH.

Optionally, the maximum aggregation level supported by the PDCCH is not in a predefined first set, and the predefined first set includes at least one candidate aggregation level.

Optionally, the aggregation level of the PDCCH is equal to the numerical count of the CCEs included in the CORESET.

Optionally, the aggregation level of the PDCCH is in a predefined first set, and the predefined first set includes at least one candidate aggregation level.

Optionally, the maximum aggregation level supported by the PDCCH is greater than the numerical count of the CCEs included in the CORESET.

Optionally, the processing unit 910 is specifically configured to:
determine at least one aggregation level, that is greater than the numerical count of the CCEs included in the CORESET, in an aggregation level candidate set; and
determine that the aggregation level of the PDCCH is an aggregation level with a smallest value among the at least one aggregation level.

Optionally, in a case that the aggregation level used in a transmission of the PDCCH is greater than the numerical count of the CCEs included in the CORESET, and the network device performs rate matching of the PDCCH based on the aggregation level used in the transmission of the PDCCH, the processing unit 910 is further configured to:
perform bit-stuffing or symbol-stuffing on the received PDCCH, to make a length of the stuffed PDCCH equal to a length of information obtained after the network device performs resource mapping according to the maximum aggregation level supported by the PDCCH.

Optionally, in a case that the aggregation level used in the transmission of the PDCCH is greater than the numerical count of the CCEs included in the CORESET, and the network device performs rate matching of the PDCCH based on the numerical count of the CCEs included in the CORESET corresponding to the PDCCH, the processing unit 910 is further configured to:
decode the received PDCCH.

Optionally, the first condition is that the terminal operates in a first frequency band; or
the first condition is that the numerical count of the CCEs included in the CORESET corresponding to the PDCCH is less than a first threshold.

The apparatus for processing a PDCCH of these embodiments can determine, in a case that the first condition is met, the maximum aggregation level supported by the PDCCH based on the numerical count of the CCEs included in the CORESET corresponding to the PDCCH, and receive the configuration information sent by the network device. The configuration information is used to configure the aggregation level of the PDCCH. The aggregation level of the PDCCH is used by the terminal to process the PDCCH. In this way, when the system bandwidth is insufficient, the PDCCH can be transmitted and processed more flexibly, thereby effectively improving resource utilization, improving channel transmission performance, and ensuring the reliability of communication transmission.

In order to implement the above embodiments, the embodiments of the present disclosure also propose a communication device, including: a processor and a memory. A computer program is stored in the memory. The processor executes the computer program stored in the memory, to cause the device to perform the method shown in the embodiments of FIGS. 2 to 4.

In order to implement the above embodiments, the embodiments of the present disclosure also propose a communication device, including: a processor and a memory. A computer program is stored in the memory. The processor executes the computer program stored in the memory, to cause the device to perform the method shown in the embodiments of FIGS. 5 to 7.

In order to implement the above embodiments, the embodiments of the present disclosure also propose a communication device, including: a processor and an interface circuit. The interface circuit is used to receive code instructions and transmit them to the processor. The processor is used to run the code instructions to perform the method shown in the embodiments of FIGS. 2 to 4.

In order to implement the above embodiments, the embodiments of the present disclosure also propose a communication device, including: a processor and an interface circuit. The interface circuit is used to receive code instructions and transmit them to the processor. The processor is used to run the code instructions to perform the method shown in the embodiments of FIGS. 5 to 7.

Please refer to FIG. 10, which is a schematic structural diagram of another apparatus for processing PDCCH provided by an embodiment of the present disclosure. The apparatus 1000 for processing a PDCCH may be a network device, a terminal, a chip, a chip system, or a processor that supports the network device to implement the above method, or a chip, a chip system, or a processor that supports the terminal to implement the above methods. The apparatus may be used to implement the methods described in the above method embodiments. For details, please refer to the descriptions in the above method embodiments.

The apparatus 1000 for processing a PDCCH may include one or more processors 1001. The processor 1001 may be a general-purpose processor or a special-purpose processor. For example, it may be a baseband processor or a central processing unit. The baseband processor may be used to process communication protocols and communication data, and the central processing unit may be used to control the apparatus for processing a PDCCH (such as a base station, baseband chip, terminal equipment, terminal equipment chip, DU or CU, etc.), execute computer programs, and process computer program data.

Optionally, the apparatus 1000 for processing a PDCCH may further include one or more memories 1002, on which a computer program 1003 may be stored. The processor 1001 executes the computer program 1003 to cause the apparatus for processing a PDCCH 1000 to perform the methods described in the above method embodiments. The computer program 1003 may be embedded in the processor 1001. In this case, the processor 1001 may be implemented by hardware.

Optionally, data may also be stored in the memory 1002. The apparatus 1000 for processing a PDCCH and the memory 1002 may be provided separately or integrated together.

Optionally, the apparatus 1000 for processing a PDCCH may further include a transceiver 1005 and an antenna 1006. The transceiver 1005 may be referred to as a transceiving unit, a transceiving machine, or a transceiver circuit, etc., and is used to implement a transceiver function. The transceiver 1005 may include a receiver and a transmitter. The receiver may be referred to as a receiver or a receiving circuit, etc., and is used to implement a receiving function; the transmitter may be referred to as a transmitter or a transmitting circuit, etc., and is used to implement a transmitting function.

Optionally, the apparatus 1000 for processing a PDCCH may further include one or more interface circuits 1007. The interface circuit 1007 is used to receive code instructions and transmit them to the processor 1001. The processor 1001 executes code instructions to enable the apparatus 1000 for processing a PDCCH to perform the methods described in the above method embodiments.

In an implementation, the processor 1001 may include a transceiver for implementing receiving and transmitting functions. For example, the transceiver may be a transceiver circuit, or an interface, or an interface circuit. The transceiver circuits, interfaces or interface circuits used to implement the receiving and transmitting functions may be separate or integrated. The above-mentioned transceiver circuit, interface or interface circuit can be used for reading and writing codes/data, or the above-mentioned transceiver circuit, interface or interface circuit can be used for transmitting or delivering signals.

In an implementation, the apparatus 1000 for processing a PDCCH may include a circuit, and the circuit may implement the functions of sending, receiving, or communicating in the aforementioned method embodiments. The processor and transceiver described in the present disclosure may be implemented on an integrated circuit (IC), an analog IC, a radio frequency integrated circuit RFIC, a mixed signal IC, an application specific integrated circuit (ASIC), a printed circuit board (PCB), an electronic device, etc. The processor and transceiver may also be manufactured using various IC process technologies, such as complementary metal oxide semiconductor (CMOS), n-type metal oxide semiconductor (NMOS), positive channel metal oxide semiconductor (PMOS), bipolar junction transistor (BJT), bipolar CMOS (BiCMOS), silicon germanium (SiGe), gallium arsenide (GaAs), etc.

The apparatus for processing a PDCCH described in the above embodiments may be a network device or a terminal, but the scope of the apparatus for processing a PDCCH described in the present disclosure is not limited thereto, and the structure of the apparatus for processing a PDCCH may not be limited to FIGS. 8-9. The apparatus for processing a PDCCH may be an independent device or may be a part of a larger device. For example, the apparatus for processing a PDCCH may be:
(1) a stand-alone IC, chip, chip system or subsystem;
(2) a collection of ICs including one or more ICs, in an embodiment of the disclosure, the collection of ICs may also include storage components for storing data and computer programs;
(3) an ASIC, such as a modem;
(4) modules that can be embedded within other devices;
(5) receivers, terminals, smart terminals, cellular phones, wireless devices, handheld machines, mobile units, in-vehicle devices, network devices, cloud devices, artificial intelligence devices, and the like; and
(6) others.

In a case that the apparatus for processing a PDCCH can be a chip or a chip system, reference may be made to the schematic structural diagram of the chip shown in FIG. 11. The chip shown in FIG. 11 includes a processor 1101 and an interface 1102. The number of processors 1101 may be one or more, and the number of interfaces 1102 may be multiple.

For the case where the chip is used to implement the functions of the network device in the embodiments of the present disclosure:
the interface 1102 is configured to transmit code instructions to the processor; and
the processor 1101 is configured to execute code instructions to perform the methods shown in FIG. 2 to FIG. 4.

For the case where the chip is used to implement the functions of the terminal in the embodiments of the present disclosure:
the interface 1102 is configured to transmit code instructions to the processor; and
the processor 1101 is configured to execute code instructions to perform the methods shown in FIG. 5 to FIG. 7 .

Optionally, the chip further includes a memory 1103, which is used to store necessary computer programs and data.

It is understandable by those skilled in the art that various illustrative logical blocks and steps listed in the embodiments of the disclosure may be implemented by electronic hardware, computer software, or a combination of both. Whether such function is implemented by hardware or software depends on the particular application and the design requirements of the entire system. Those skilled in the art may, for each particular application, use various methods to implement the described function, but such implementation should not be construed as being beyond the scope of protection of the embodiments of the disclosure.

The embodiments of the present disclosure also provide a communication system, which includes the apparatus for processing a PDCCH as the network device in the embodiments and the apparatus for processing a PDCCH as the terminal, as described in the embodiments of FIGS. 8-9; or the system includes the apparatus for processing a PDCCH as the terminal and the apparatus for processing a PDCCH as the network device, as described in the embodiment of FIG. 10.

The present disclosure also provides a readable storage medium having instructions stored thereon. When the instructions are executed by a computer, the function of any of the method embodiments described above is implemented.

The present disclosure also provides a computer program product. When the computer program product is executed by a computer, the function of any of the method embodiments described above is implemented.

The above embodiments may be implemented in whole or in part by software, hardware, firmware, or any combination thereof. When implemented using software, it may be implemented, in whole or in part, in the form of a computer program product. The computer program product includes one or more computer programs. When loading and executing the computer program on the computer, all or part of processes or functions described in the embodiments of the disclosure are implemented. The computer may be a general-purpose computer, a dedicated computer, a computer network, or other programmable devices. The computer program may be stored in a computer-readable storage medium or transmitted from one computer-readable storage medium to another computer-readable storage medium. For example, the computer program may be transmitted from one web site, computer, server, or data center to another web site, computer, server, or data center, in a wired manner (e.g., by using coaxial cables, fiber optics, or digital subscriber lines (DSLs)) or wirelessly (e.g., by using infrared wave, wireless wave, or microwave). The computer-readable storage medium may be any usable medium to which the computer has access or a data storage device integrated by one or more usable mediums such as a server and a data center. The usable medium may be a magnetic medium (e.g., floppy disk, hard disk, and tape), an optical medium (e.g., a high-density digital video disc (DVD)), or a semiconductor medium (e.g., a solid state disk (SSD)).

Those skilled in the art understand that "first", "second", and other various numerical numbers involved in the disclosure are only described for the convenience of differentiation, and are not used to limit the scope of the embodiments of the disclosure, or indicate the order of precedence.

The term "at least one" in the disclosure may also be described as one or more, and the term "multiple" may be two, three, four or more, which is not limited in the disclosure. In the embodiments of the disclosure, for a type of technical features, "first", "second" and "third", and "A", "B", "C" and "D" are used to distinguish different technical features of the type, the technical features described using the "first", "second" and "third", and "A", "B", "C" and "D" do not indicate any order of precedence or magnitude.

The corresponding relationships shown in the tables in the present disclosure may be configured or predefined. The values of the information in each table are only examples and can be configured to other values, which are not limited by the present disclosure. When configuring the correspondence between information and parameters, it is not necessarily required to configure all the correspondences illustrated in the tables. For example, in the table in the present disclosure, the corresponding relationships shown in some rows may not be configured. For another example, appropriate deformation adjustments may be made based on the above table, such as splitting, merging, etc. The names of the parameters shown in the titles of the above tables may also be other names understandable to the communication apparatus, and the values or representations of the parameters may also be other values or representations understandable to the communication apparatus. When implementing the above tables, other data structures may also be used, such as arrays, queues, containers, stacks, linear lists, pointers, linked lists, trees, graphs, structures, classes, heaps, hash tables or the like.

The predefined in the present disclosure may be understood as defined, predefined, stored, pre-stored, pre-negotiated, pre-configured, solidified, or pre-burned.

Those skilled in the art will appreciate that the units and algorithm steps of each example described in conjunction with the embodiments disclosed herein may be implemented by electronic hardware, or a combination of computer software and electronic hardware. Whether these functions are performed in hardware or software depends on the specific application and design constraints of the technical solution. The person skilled in the art can use different methods to implement the described functions for each specific application, but such implementation should not be considered to be beyond the scope of the present disclosure.

Those skilled in the art can clearly understand that, for the convenience and brevity of description, for the specific working processes of the systems, apparatuses and units described above reference can be made to the corresponding processes in the aforementioned method embodiments and details will not be repeated here.

It should be understood that various forms of the processes shown above can be used, with steps reordered, added, or deleted. For example, the steps described in the embodiments of the present disclosure may be executed in parallel, sequentially, or in different orders, as long as the desired results of the technical solutions disclosed in the present disclosure can be achieved, and the description here does not impose any restrictions thereon.

The above specific implementation manner does not constitute a limitation on the protection scope of the present disclosure. It should be apparent to those skilled in the art that various modifications, combinations, sub-combinations and substitutions may be made depending on design requirements and other factors. Any modifications, equivalent substitutions, and improvements made within the spirit and principles of the present disclosure should be included in the scope of protection of the present disclosure.

## Claims

1. A method for processing a physical downlink control channel (PDCCH), performed by a network device, comprising:
determining that a first condition is met;
determining a maximum aggregation level supported by the PDCCH based on a numerical count of control channel elements (CCEs) comprised in a control resource set (CORESET) corresponding to the PDCCH; and
sending configuration information to a terminal, wherein the configuration information is used to configure an aggregation level used in a transmission of the PDCCH, the aggregation level used in the transmission of the PDCCH is used by the terminal to process the PDCCH, and the aggregation level used in the transmission of the PDCCH does not exceed the maximum aggregation level supported by the PDCCH.

2. The method according to claim 1, wherein the maximum aggregation level supported by the PDCCH is not in a predefined first set, and the predefined first set comprises at least one candidate aggregation level.

3. The method according to claim 1 or 2, wherein the maximum aggregation level supported by the PDCCH is equal to the numerical count of the CCEs comprised in the CORESET.

4. The method according to claim 1, wherein the maximum aggregation level supported by the PDCCH is in a predefined first set, and the predefined first set comprises at least one candidate aggregation level.

5. The method according to claim 4, wherein the maximum aggregation level supported by the PDCCH is greater than the numerical count of the CCEs comprised in the CORESET.

6. The method according to claim 5, wherein determining the maximum aggregation level supported by the PDCCH comprises:
determining at least one candidate aggregation level, that is greater than the numerical count of the CCEs comprised in the CORESET, in the predefined first set; and
determining that the maximum aggregation level supported by the PDCCH is an aggregation level with a smallest value among the at least one candidate aggregation level.

7. The method according to claim 5, further comprising:
performing rate matching of the PDCCH based on the aggregation level used in the transmission of the PDCCH, in response to the aggregation level used in the transmission of the PDCCH being greater than the numerical count of the CCEs comprised in the CORESET.

8. The method according to claim 7, further comprising:
determining a second CORESET according to the maximum aggregation level supported by the PDCCH, wherein a numerical count of CCEs comprised in the second CORESET is equal to the maximum aggregation level supported by the PDCCH, and the CCEs in the second CORESET comprise the CCEs in the CORESET corresponding to the PDCCH; and
mapping the PDCCH to the CCEs comprised in the second CORESET, and determining information in the CCEs in the CORESET corresponding to the PDCCH as information to be sent to the terminal.

9. The method according to claim 5, further comprising:
performing rate matching of the PDCCH based on the numerical count of the CCEs comprised in the CORESET corresponding to the PDCCH, in response to the aggregation level used in the transmission of the PDCCH being greater than the numerical count of the CCEs comprised in the CORESET.

10. The method according to claim 7, further comprising:
mapping the PDCCH to the CCEs comprised in the CORESET corresponding to the PDCCH.

11. The method according to any one of claims 1 to 10, wherein
the first condition is that the terminal operates in a first frequency band; or
the first condition is that the numerical count of the CCEs comprised in the CORESET corresponding to the PDCCH is less than a first threshold.

12. A method for processing a physical downlink control channel (PDCCH), performed by a terminal, comprising:
determining that a first condition is met;
determining a maximum aggregation level supported by the PDCCH based on a numerical count of control channel elements (CCEs) comprised in a control resource set (CORESET) corresponding to the PDCCH; and
receiving configuration information sent by a network device, wherein the configuration information is used to configure an aggregation level of the PDCCH, the aggregation level of the PDCCH is used by the terminal to process the PDCCH, and the configured aggregation level of the PDCCH does not exceed a maximum aggregation level supported by the PDCCH.

13. The method according to claim 12, wherein the maximum aggregation level supported by the PDCCH is not in a predefined first set, and the predefined first set comprises at least one candidate aggregation level.

14. The method according to claim 12 or 13, wherein the aggregation level of the PDCCH is equal to the numerical count of the CCEs comprised in the CORESET.

15. The method according to claim 12, wherein the aggregation level of the PDCCH is in a predefined first set, and the predefined first set comprises at least one candidate aggregation level.

16. The method according to claim 15, wherein the maximum aggregation level supported by the PDCCH is greater than the numerical count of the CCEs comprised in the CORESET.

17. The method according to claim 16, wherein determining the maximum aggregation level supported by the PDCCH comprises:
determining at least one aggregation level, that is greater than the numerical count of the CCEs comprised in the CORESET, in an aggregation level candidate set; and
determining that the aggregation level of the PDCCH is an aggregation level with a smallest value among the at least one aggregation level.

18. The method according to claim 16, wherein in a case that the aggregation level used in a transmission of the PDCCH is greater than the numerical count of the CCEs comprised in the CORESET, and the network device performs rate matching of the PDCCH based on the aggregation level used in the transmission of the PDCCH, the method further comprises:
performing bit-stuffing or symbol-stuffing on the received PDCCH, to make a length of the stuffed PDCCH equal to a length of information obtained after the network device performs resource mapping according to the maximum aggregation level supported by the PDCCH.

19. The method according to claim 16, wherein in a case that the aggregation level used in the transmission of the PDCCH is greater than the numerical count of the CCEs comprised in the CORESET, and the network device performs rate matching of the PDCCH based on the numerical count of the CCEs comprised in the CORESET corresponding to the PDCCH, the method further comprises:
decoding the received PDCCH.

20. The method according to any one of claims 12 to 19, wherein
the first condition is that the terminal operates in a first frequency band; or
the first condition is that the numerical count of the CCEs comprised in the CORESET corresponding to the PDCCH is less than a first threshold.

21. An apparatus for processing a physical downlink control channel (PDCCH), comprising:
a processing unit, configured to determine that a first condition is met;
the processing unit being further configured to determine a maximum aggregation level supported by the PDCCH based on a numerical count of control channel elements (CCEs) comprised in a control resource set (CORESET) corresponding to the PDCCH; and
a transceiving unit, configured to send configuration information to a terminal, wherein the configuration information is used to configure an aggregation level used in a transmission of the PDCCH, the aggregation level used in the transmission of the PDCCH is used by the terminal to process the PDCCH, and the aggregation level used in the transmission of the PDCCH does not exceed the maximum aggregation level supported by the PDCCH.

22. An apparatus for processing a physical downlink control channel (PDCCH), comprising:
a processing unit, configured to determine that a first condition is met;
the processing unit being further configured to determine a maximum aggregation level supported by the PDCCH based on a numerical count of control channel elements (CCEs) comprised in a control resource set (CORESET) corresponding to the PDCCH; and
a transceiving unit, configured to receive configuration information sent by a network device, wherein the configuration information is used to configure an aggregation level of the PDCCH, the aggregation level of the PDCCH is used by the apparatus to process the PDCCH, and the configured aggregation level of the PDCCH does not exceed a maximum aggregation level supported by the PDCCH.

23. A communication device, comprising a processor and a memory, wherein the memory stores a computer program, the processor executes the computer program stored in the memory, and the device is caused to perform the method according to any one of claims 1 to 11, or to perform the method according to any one of claims 12 to 20.

24. A communication device, comprising a processor and an interface circuit, wherein
the interface circuit is configured to receive code instructions and transmit the code instructions to the processor, and
the processor is configured to run the code instructions to perform the method according to any one of claims 1 to 11, or the method according to any one of claims 12 to 20.

25. A computer-readable storage medium for storing instructions that, when executed, enable the method according to any one of claims 1 to 11 to be implemented, or enable the method according to any one of claims 12 to 20 to be implemented.

26. A communication system, comprising:
a network device, configured to perform the method according to any one of claims 1 to 11; and
a terminal, configured to perform the method according to any one of claims 12 to 20.
